Europäisches Patentamt

European Patent Office

Office européen des brevets

(11) Publication number: **0 356 741**

**A1**

## (12) EUROPEAN PATENT APPLICATION

(21) Application number: **89114226.7**

(51) Int. Cl.⁵: **H04B 5/00 , G08C 23/00**

(22) Date of filing: **02.08.89**

(30) Priority: **08.08.88 IT 2168788**

(43) Date of publication of application:
**07.03.90 Bulletin 90/10**

(84) Designated Contracting States:
**BE DE FR GB IT NL**

(71) Applicant: **FABBRICHE RIUNITE MISURATORI SACOFGAS S.p.A**
**Via A. Sforza, 85**
**I-20141 Milan(IT)**

(72) Inventor: **Ponzio, Vittorio**
**Via Tortona, 74**
**Milan(IT)**

(74) Representative: **Dr. Ing. A. Racheli & C.**
**Viale San Michele del Carso, 4**
**I-20144 Milano(IT)**

(54) **Process and apparatus for transmitting measurements through a metal pipe.**

(57) Provision is made for transmission from a central zone (Q), through a normal iron pipe (10) and its branches (11, 12, 13, 14), of a coded signal that is received by one or more users (U1, U2, U3, U4) which compare the signal received with their own code which they have stored and then, if the signal is identical, operate at least one reader which reads a measuring device, and for transmission of said reading to the central area (Q), again through the iron pipe (10) and its branches (11, 12, 13, 14) by the same procedure as for transmission of the coded signal.

Provision is preferably made in the central supply area for transmission of a number of coded signals each one corresponding to the respective user connected to said central supply area.

# PROCESS AND APPARATUS FOR TRANSMITTING MEASUREMENTS THROUGH A METAL PIPE

The present invention concerns an apparatus for transmitting measurements through the iron pipes normally present in a supply network, for example for water, gas and such like.

There are various known data transmission systems. They can certainly be considered efficient from a functional point of view, however they have the serious drawback of requiring not only a separate reader for each measuring device but also an electrical conductor for transmission between each reader and the centre where the readings are processed. Installation of this conductor involves considerable costs and problems, especially if it must be installed in existing networks where it must be set into the walls or made to run on the outside of the building, to the obvious detriment of the appearance of the building and operation of the conductor.

It is also advisable to be able to check the continuity of a pipe, for example for the supply of gas, in order to ensure that it is not tapped upstream of the meter.

Aim of the present invention is therefore to provide a reading system for one or more measuring devices that does not require any additional electrical conductor to be brought to said device.

Another aim is to check the continuity of an iron pipe.

The abovementioned aims have been achieved by providing for transmission from a central zone, through a coil around a normal iron pipe, of a coded signal received by each user which compares the coded signal with its own stored signal and, if the comparison is positive, it operates the reading of at least one measuring device; said reading is then transmitted back through the iron pipe or its branches, by the same procedure as for sending the coded signal.

At least one receiving coil is preferably paralleled with a capacitor, so as to form a circuit resonating at the transmission frequency.

More than one reading can be carried out in each user.

The apparatus according to the present invention comprises a transmitting coil installed in a central supply zone around a section of a normal iron pipe of the type currently on the market, a receiving coil, installed around another section of the same pipe or a branch thereof, said coil being connected to a comparator circuit which stores its own code number and to at least one reader of a measuring device which is connected in turn to a transmitter consisting of a further coil surrounding the iron pipe or a branch thereof, which sends the data to a receiver placed in the central supply zone.

The receiving coils are each preferably tuned with the frequency of the signals that they are to receive by means of a capacitor.

Normally provision is preferably made for the transmitter to be able to send a plurality of coded signals each corresponding to a specific user, so that the reading can be carried out in a block of flats comprising a plurality of users.

The receiving coil will normally have at least a thousand times more turns than the transmitting coil, preferably about 10 000 times more.

The number of turns is calculated according to the attenuation, i.e. the distance and the number of joints and branches present in the iron pipe.

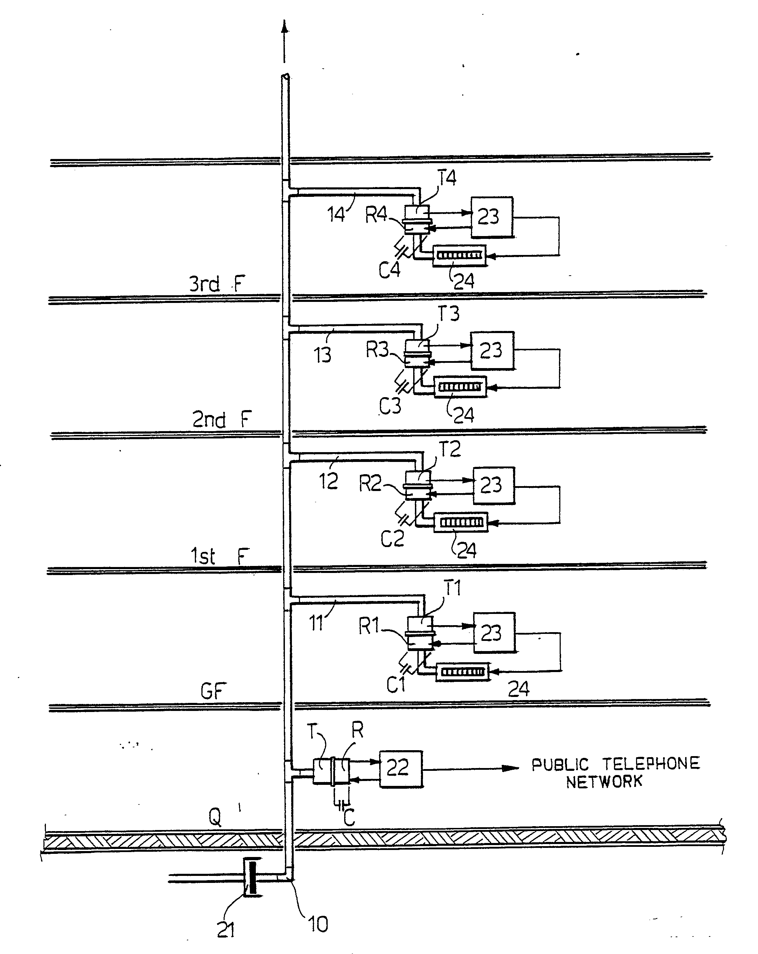

The invention will now be more fully explained on the basis of an exemplary embodiment illustrated in the attached drawing, showing an overall view of an apparatus installed in a block of flats.

With reference to the drawings it will be noted that number 10 designates an inlet pipe, for example for supply of gas to a block of flats. Number 21 designates the dielectric joint that electrically insulates the supply column from the supply network. Pipe 10 enters from the underground floor or another central supply zone Q and extends upwards forming a series of branches 11, 12, 13 and 14 which supply the various users U1, U2, U3 and U4, respectively set on the ground floor (GF) and on the first, second and third floors (1st F, 2nd F, 3rd F). A transmitting coil T and a receiving coil R are provided in the central zone Q of the building. They are installed around a normal gas supply pipe 10.

The transmitting coil T is controlled by an electronic apparatus 22 that transmits a series of impulses through the transmitter coil T forming consecutive series of codes. The frequency of the impulses transmitted by the transmitting coil T is higher than 20 kHz, with a preferred value of 80 kHz.

The receiving coil R is also connected to the electronic apparatus 22 in which a transcoder is provided for transmission on a normal transmitting line of the signals received.

The coil R may be paralleled with a capacitor C that tunes said coil R with the frequency of the signals that it is to receive.

Transmitting coil T1, and receiving coil R1, then T2 and R2, T3 and R3, T4 and R4, respectively, are provided at each user U1, U2, U3 and U4. Each of these pair of coils R1, T1; R2, T2; R3, T3; R4, T4 is connected to an apparatus 23 which compares the signal received with a stored code and then, when the code received is identical to the stored one, operates a reader 24 that sends a signal corresponding to the measurement taken to the respective transmitting coil T1, T2, T3 or T4. Said coil transmits it, again through the pipe 10 and its branches 11, 12, 13 and 14, to the central receiver R which has been activated in the meantime. The step of interrogating the users and of receiving the relative answer signals can be then repeated for each user sequentially upon request.

The apparatus 23 can also operate two or more readers sequentially, to read measuring devices such as those for electric power supply, water supply or other data.

Each receiving coil R, R1, R2, R3 and R4 can be paralleled with a capacitor, C, C1, C2, C3 and C4 respectively which tunes the respective coil with the frequency of the signal that it is to receive.

For example transmission has been carried out through a C30 1″ iron gas pipe using a coil with 272 turns formed by a 2,5 mm diameter wire at a frequency of 50 Hz. The T coil was around the iron pipe. The receiving coil R had 46 000 turns of 0,15 mm diameter wire. It received the signal at a distance of 16 m of pipe. If the receiving coil R were to be paralleled with a capacitor C that tuned it with the frequency of the transmitter T, the number of turns in the R coil could be reduced while leaving the signal unchanged.

## Claims

1. A process for the transmission of measurements, characterized in that it comprises the following steps:
- transmission of series of coded impulses having a frequency higher than 20 kHz through a transmitting coil (T) placed in a central distribution zone (Q) and surrounding a section of a normal iron pipe (10), which constitutes an open circuit for the transmission of electromagnetic waves;
- reception of said signals by a receiving coil (R1, R2, R3, R4) installed at each user surrounding another section of pipe (10) or a branch thereof (11, 12, 13, 14);
- comparison of said signal with a code stored by each single user; and, if identical,
- operation of at least one reader which carries out reading of at least one measuring device;
- transmission of a train of coded answer impulses corresponding to the reading carried out, having a frequency higher than 20 kHz through the iron pipe (10) or its branches (11, 12, 13, 14) through a transmitting coil (T1, T2, T3, T4)
- reception of said trains of coded answer impulses through a receiving coil (R) placed in the central supply zone (Q).

2. A process according to claim 1, characterized in that one receiving coil (R, R1, R2, R3, R4) is paralleled with a capacitor (C, C1, C2, C3, C4) so that it forms a resonant circuit on the frequency of the respective transmission that it is to receive.

3. A process according to any one of the preceding claims, characterized in that in the central supply zone (Q) provision is made for carrying out sequentially the transmission of a number of coded signals corresponding to the number of users (U1, U2, U3, U4) connected to said central supply zone (Q).

4. A process according to any one of the preceding claims, characterized in that more than one reading is made for each user.

5. An apparatus for the transmission of measurements, characterized in that it comprises:
- a transmitting coil (T) placed in a central supply zone (Q) surrounding a section of a normal iron pipe (10) which constitutes an open circuit for the transmission of electromagnetic waves;
- a receiving coil (R1, R2, R3, R4) surrounding another section of the iron pipe (10) or its branches (11, 12, 13, 14), electromagnetically coupled with the transmitting coil (T), each receiving coil (R1, R2, R3, R4) being connected to
- an apparatus (23) comprising a comparator that stores its own code and at least one reader that is connected in turn to
- a transmitting coil (T1, T2, T3, T4) also surrounding a section of the iron pipe (10) or its branches (11, 12, 13, 14);
- a receiving coil (R) placed in the central supply zone (Q) surrounding a section of the iron pipe (10), electromagnetically coupled with the transmitting coils (T1, T2, T3, T4).

6. An apparatus according to claim 5, characterized in that the transmitter (T) is capable of sequentially transmitting a plurality of coded signals each corresponding to a specific user, so that the reading can be done for a plurality of users in a block of flats.

7. An apparatus according to claim 5 or 6, characterized in that the receiving coil (R, R1, R2, R3, R4) has at least a thousand times as many turns as the transmitting coil (T, T1, T2, T3, T4).

8. An apparatus according to claim 5 or 6, characterized in that the number of turns in the receiving coil (R, R1, R2, R3, R4) is in the order of 10 000 times as many as in the transmitting coil (T, T1, T2, T3, T4).

9. An apparatus according to any one of the preceding claims from 5 to 8, characterized in that the number of turns in the receiving coil (R, R1, R2, R3, R4) is calculated according to the attenuation of the signal in the pipe (10) and its branches (11, 12, 13, 14) i.e. to the distance and the number of joints present.

10. An apparatus according to any one of the preceding claims from 5 to 9, characterized in that at least one receiving coil (R, R1, R2, R3, R4) is paralleled with a capacitor (C, C1, C2, C3, C4), so as to realize a circuit resonating at the frequency of the respective transmission.

T4
14
R4
23
C4
24

3rd F

T3
13
R3
23
C3
24

2nd F

T2
12
R2
23
C2
24

1st F

T1
11
R1
23
C1
24

GF

T
R
22
PUBLIC TELEPHONE
NETWORK
C

Q

21
10

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | DE-A-2 829 302 (KRAUSE) <br> * Page 5, lines 1-3; page 6, last paragraph - page 7, lines 3,26-28; page 9, lines 30-32 * | 1,5 | H 04 B 5/00 <br> G 08 C 23/00 |
| A | | 2,10 | |
| Y | US-A-3 702 460 (BLOSE) <br> * Column 3, line 42 - column 4, line 10; column 5, lines 49-53; column 9, lines 18-25; column 10, lines 20-26; column 16, lines 29-35; figure 4 * | 1,5 | |
| A | | 3,6 | |
| A | FR-A-1 465 366 (BELHAZY) <br> * Page 1, left-hand column, line 26 - right-hand column, line 28, line 34 - page 2, right-hand column, line 22 * | 1 | |
| A | DE-A-3 019 124 (MIELKE) <br> * Page 5, lines 18-29 * | 1,5 | TECHNICAL FIELDS SEARCHED (Int. Cl.5) |
| A | DE-A-3 147 339 (BRAUN) <br> * Page 6, lines 22-29; page 8, line 5 - page 9, paragraph 1 * | 1,5 | H 04 B <br> G 08 C |

The present search report has been drawn up for all claims

| Place of search | Date of completion of the search | Examiner |
|---|---|---|
| THE HAGUE | 09-11-1989 | HOLPER G.E.E. |